# EUROPEAN PATENT APPLICATION

(11) **EP 1 275 298 A2**
(43) Date of publication of application: **15.01.2003**
(21) Application number: 02425396.5
(22) Date of filing: 17.06.2002
(51) Int. Cl.: A01K 39/01

(54) **Feeding trough in particular for aviculture**

(30) Priority: 22.06.2001 IT VR20010068
(71) Applicant: SKA S.P.A., I-36066 Sandrigo (Vicenza) (IT)
(72) Inventor: Mastropasqua, Berardo, I-36100 Vicenza (IT); Manfrin, Adriano, I-36066 Sandrigo (IT)
(74) Representative: Lanzoni, Luciano

(57) **Abstract**

Feeding trough, in particular for aviculture, provided with a plurality of feeding stations (18) through which the animals can access the feed present in a container (2). Each station (18) is delimited at least partially by a wall provided with a smooth, curved surface, and constitutes a guided inlet towards the feed, so as to allow only one animal at a time to access the feed. The feeding trough comprises a lower plate (2) that constitutes the container and that has an inner surface (3) for the feed. The feed trough also comprises a subdividing element (13) which has a lower surface (14) facing the plate (2), and an upper surface (15). The subdividing element (13) comprises a peripheral edge (17) that defines the stations (18), each of which is identified by a segment (19) of the edge itself extending from an initial point (20) to a final point (21). In correspondence with each station (18) the lower surface (14) of the subdividing element is concave. The feeding trough also comprises a distributor (4) of the feed operatively associated to the plate (2) above the inner surface (3), and able to be associated to a conduit (5) for transporting the feed. The subdividing element (13), which has substantially discoidal shape, is provided with a through hole (16) to allow the passage of the distributor (4) and the dispensing of the feed to the plate (2).

## Description

The present invention relates to a feeding trough, in particular for aviculture of the type comprising the characteristics expressed in the preamble to Claim 1.

The preferred field of destination of the present invention is that of aviculture, but it can be applied to any other type of animal breeding in which it may be useful.

Particular advantages that it allows to obtain make the present invention advantageously applicable in the aviculture industry, and in particular in breeding farms.

In such farms, males and females live in a mixed environment, but must be fed with diversified and rationed feeds, in order to improve their reproductive capability.

Taking poultry as an example, it is therefore necessary for hens not to be able to eat the roosters' feed, and for the roosters not to be able to eat the hens'.

To prevent hens from eating what is reserved to the roosters, it is generally sufficient to hang the feeding trough slightly higher and let nature take its course.

Roosters (and males in general) dominate their territory and thus prevent hens from approaching their feeding trough when the feed arrives.

Preventing males from eating from the females' feeding troughs, however, is not so simple.

A first strategy employed today, and applied to linear channel feeding troughs, provides for positioning above the channel a metallic grid with sufficiently narrow pitch to prevent the passage of the males' heads, which are larger than the females'.

The limitation of the clearance for the heads can be obtained only in width, or also in height by using a passing thread, or a tube, parallel to the channel.

The described technique, however, has the main drawback that the grid conformation jeopardises the animals' safety.

Both hens and any roosters that may attempt to access the feed risk injuring themselves in particular in correspondence with their crest.

However, a wounded animal that bleeds, or even an animal dirtied by the blood of another animal, is immediately attacked by the other animals present that kill it because of their instinct, which leads them to cannibalism.

A second type of trough used today provides for a circular conformation with a lower plate whereto it is connected above a distributor of the feed, in turn supplied by a supply conduit.

Many circular feeding trough in widespread use today, both for males and for females, comprise, between the plate and distributor, a plurality of convex spokes which define between them a plurality of sections for accessing the feed.

Different solutions allow to adapt generic feeding troughs for roosters and hens, to feeding troughs for hens only.

A first possibility provides for the use of an element limiting the height of the sections, which may be constituted either by a thread positioned along a circular trajectory at a determined distance from the plate, or by a counter-plate inserted inside the spokes, in the area proximate to the distributor.

An alternative solutions instead provides for limiting the height of the inlet sections by varying the distance between the plate and a lid positioned above the plate itself. In this solution the spokes are not present.

A second possibility is instead that of limiting the width of the sections for accessing the feed.

This is generally obtained with a grid inserted inside the spokes and in turn constituted by a plurality of spokes that intercept the access sections.

Said internal grid can be fixed or adjustable depending on the models.

An additional solution of circular feeding trough provides for access to the plate to be assured by holes obtained through a lid positioned on the plate itself.

However, the solutions described above for circular feeding troughs have a series of drawbacks.

In the first place, all described solutions entail a high risk of injury to the animals.

In the second place, in some of the described solutions males can still insert their heads at least in part, with the risk of remaining stuck.

Additionally, because of the conformations of circular feeding troughs in widespread use today, feeding troughs designed to allow feeding a certain number of animals, are in fact able to satisfy simultaneously only a lower number of animals than the desired one.

This is due to the fact that the animals tend to thrust their heads to the centre of the feeding trough where the feed is fresher.

They thereby place their bodies excessively close to the edge of the feeding trough, hindering the nearby animals' access, with the consequence that a part of the animals may not be able to access the plate (up to 20% of the total if the number of animals present is equal to the number of animals the feeding trough could theoretically satisfy.

In this situation the technical task constituting the basis of the present invention is to provide a feeding trough, in particular for aviculture, that overcomes the aforementioned drawbacks.

In particular, a technical task of the present invention is to provide a feeding trough, in particular for aviculture, that allows selectively to feed only females and that does not entail any risk of injury either to the males or to the females.

A further technical task of the present invention is to provide a feeding trough, in particular for aviculture, that allows simultaneously to feed a higher number of animals than the number fed by currently used feeding trough, for the same dimensions.

The specified technical task and the indicated aims are substantially achieved by a feeding trough, in particular for aviculture, as described in the accompanying claims.

Further features and advantages of the invention shall become more readily apparent from the detailed description of some preferred, but not exclusive embodiments, of a feeding trough, in particular for aviculture, illustrated in the accompanying drawings, in which:
- Figure 1 is a front elevation view of a subdividing element of the feeding stations for feeding troughs according to the present invention;
- Figure 2 shows a plan view of the subdividing element of Figure 1;
- Figure 3 shows a front elevation view of a feeding trough according to the present invention, with some parts removed the better to highlight others;
- Figure 4 shows a perspective top view of a detail of the feeding trough of Figure 3;
- Figure 5 shows a perspective top view of the feeding trough of Figure 3;

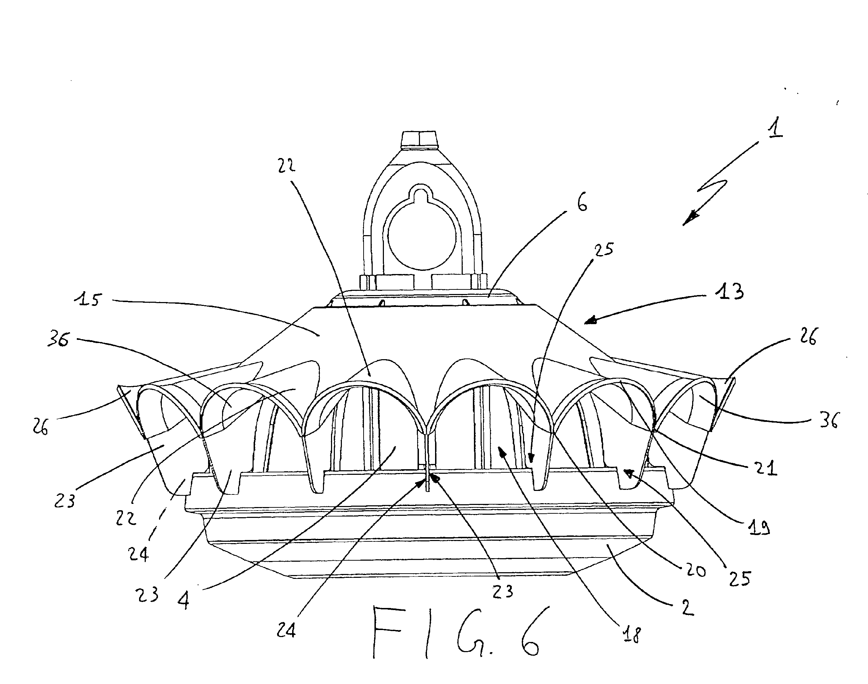

- Figure 6 shows a lateral elevation view of a feeding trough according to the present invention;
- Figure 7 shows a perspective top view of the feeding trough of Figure 6;
- Figure 8 shows a perspective top view of an embodiment of the feeding trough of Figure 7;
- Figure 9 shows a lateral section view of the subdividing element of Figure 1;
- Figure 10 shows a diagram of the operation of a device for regulating the mutual position of two parts of the feeding trough according to the present invention.

With reference to the aforementioned figures, the reference number 1 globally indicates a feeding trough, in particular for aviculture, according to the present invention.

Hereinafter reference is made to feeding troughs 1 provided with cylindrical symmetry, but the present invention can also be advantageously applied to channel feeding troughs 1.

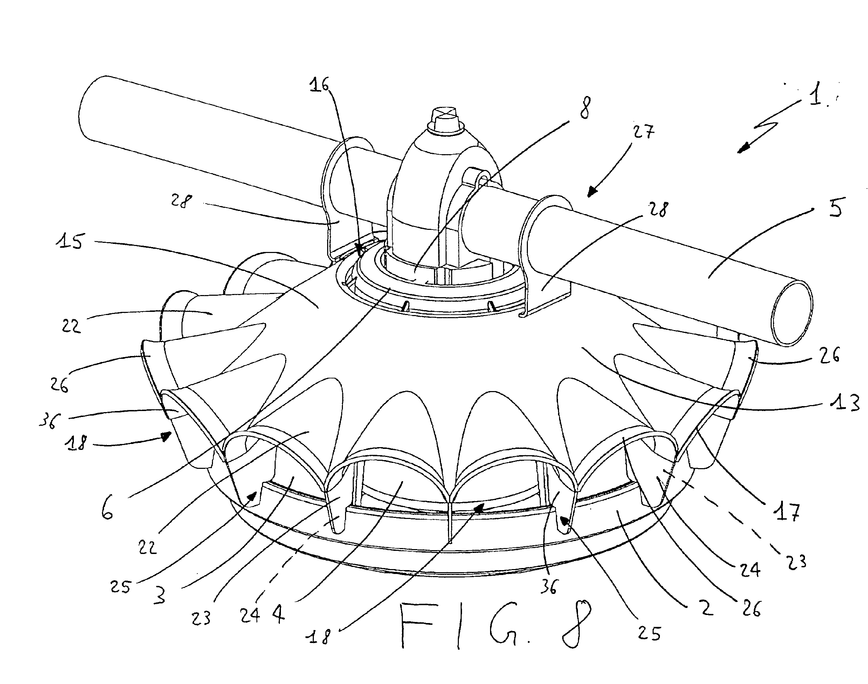

In the preferred embodiment, the feeding trough 1 comprises a lower plate 2 presenting a concave inner surface 3 to receive a feed, whereto is operatively associated a distributor 4 of the feed which develops substantially perpendicularly relative to the plate 2 itself. The distributor 4 is positioned above the inner surface 3 of the plate 2, and can be associated to a conduit 5 for supplying the feed (Figure 8).

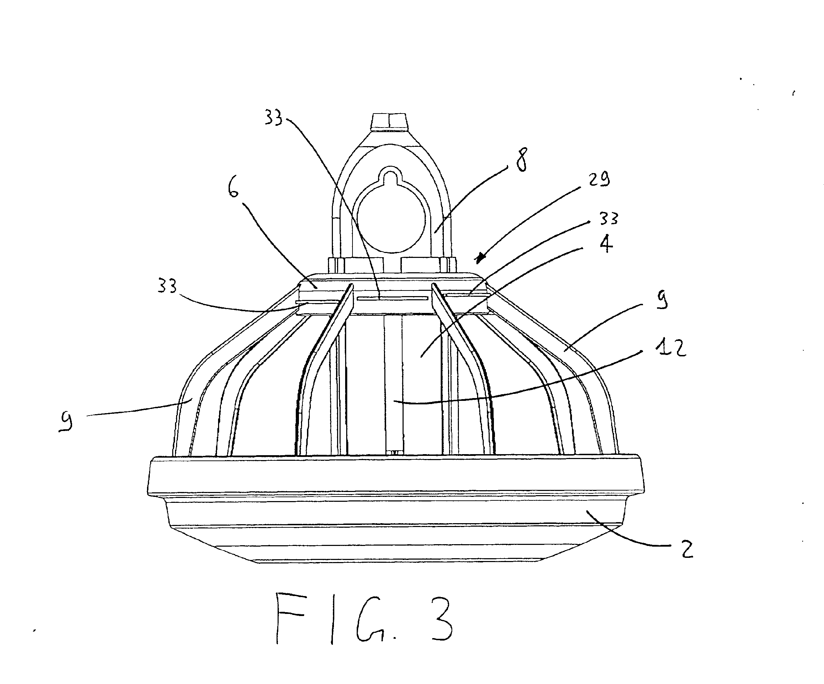

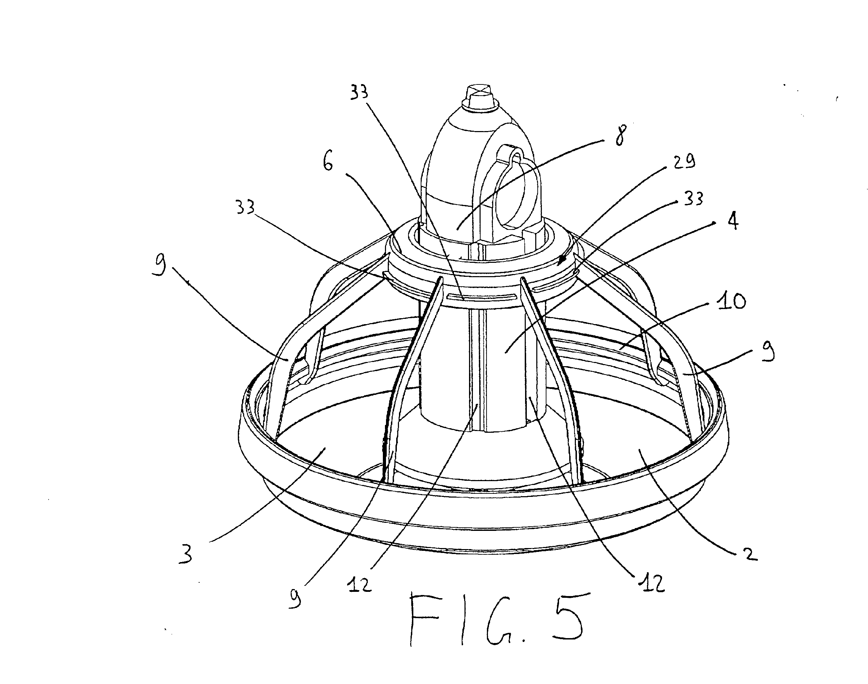

In the embodiment illustrated in the figures, the distributor 4 comprises a connecting grid 6 (Figures 3, 4 and 5) to the plate 2, constituted by an upper ring 7 associated in removable fashion to the central body 8 of the distributor 4, and connected to a plurality of convex spokes 9, to a lower ring 10 associated to the plate 2.

The upper ring 7 further comprises two latching teeth 11 able to be inserted in appropriate grooves 12 obtained in the main body 8 of the distributor 4 (Figures 3, 4 and 5).

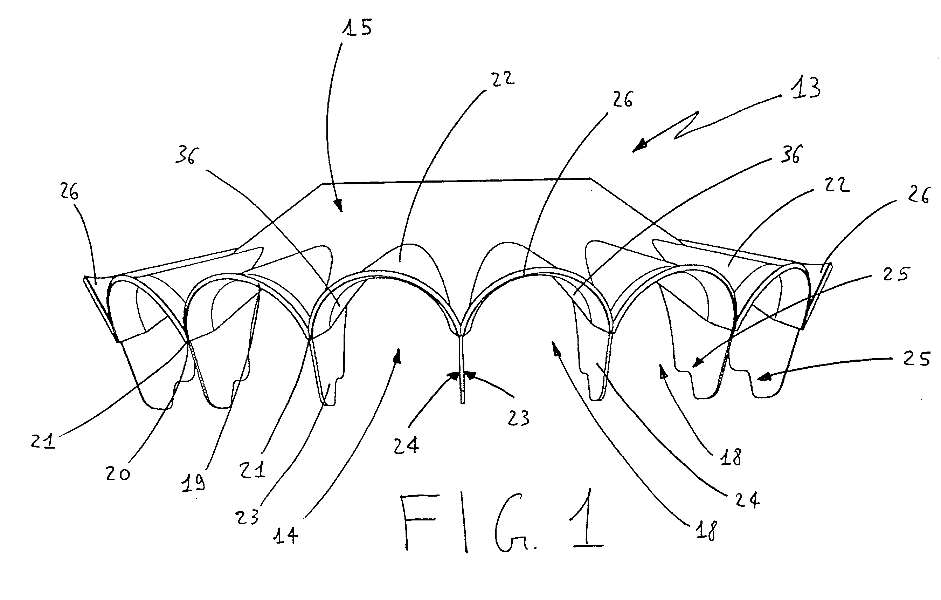

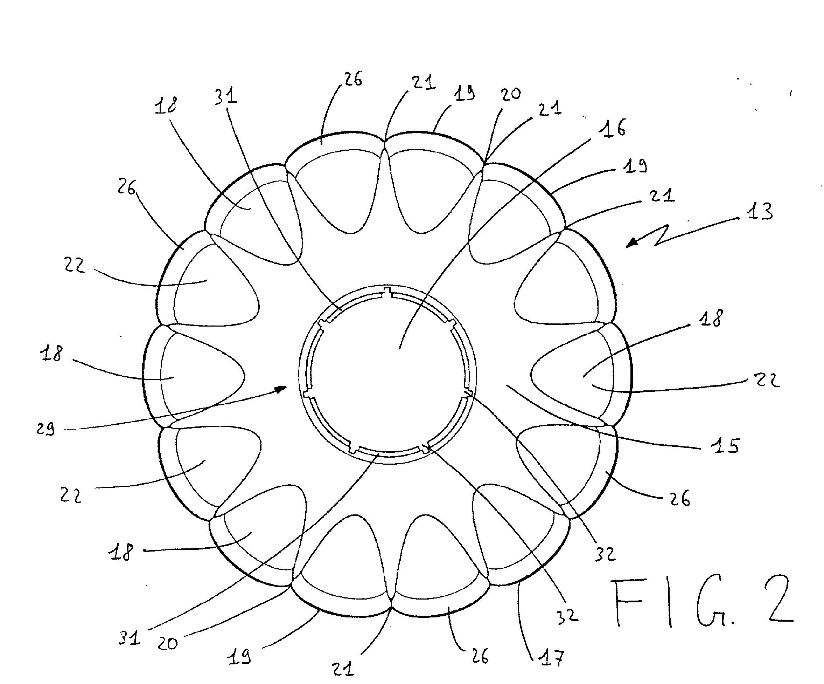

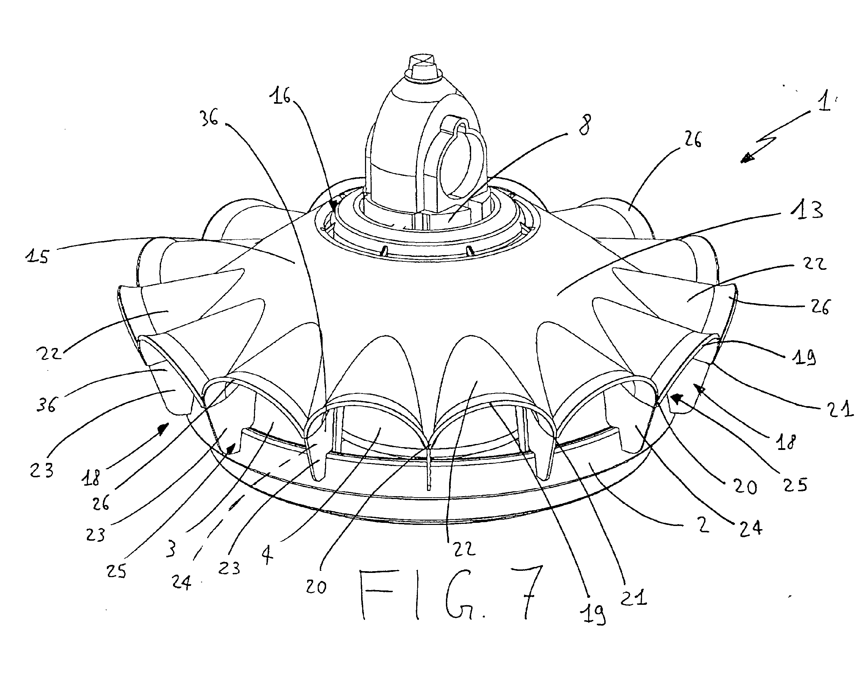

Above the connecting grid 6 is mounted an element 13 for subdividing feeding stations, having substantially discoidal shape, and having a lower surface 14 facing the plate 2, and a lower surface 15 (Figures 1, 2 and 9). The two surfaces 14, 15 are mutually connected by a through hole 16 that allows the passage of the central body 8 of the distributor 4 through subdividing element 13 itself (Figure 7).

In the illustrated embodiment the subdividing element 13 is made of laminar material with nearly constant thickness so that the profile of the upper surface 15 is shaped counter to the profile of the lower surface 14.

In some alternative embodiments, the distributor 4 can lack the connecting grid 6, whose functions can be served by the subdividing element 13.

The subdividing element 13 is provided with an outer peripheral edge 17 that defines a plurality of stations 18 identified by segments 19 of the peripheral edge 17 itself, each of which extends from an initial point 20 to a final point 21.

Each station 18 allows, in use, an animal to access the plate 2 and reach the feed.

In the illustrated embodiment, fourteen stations 18 for accessing the feed are provided.

In correspondence with each station 18 the lower surface 14 of the subdividing element 13 is convex, and shaped as a vault 22 which develops from the peripheral edge 17 towards the centre of the subdividing element 13, at least for a part of the distance between the peripheral edge 17 and the central hole 16 (in the illustrated embodiment each vault 22 covers little more than half the distance between the peripheral edge 17 and the central hole 16).

Each station 18 has a symmetrical configuration relative to a plane that is perpendicular to the straight line joining the initial point 20 and final point 21, and equidistant therefrom.

In the illustrated embodiment the distribution of the station 18 on the subdividing element 13 is symmetrical relative to the axis of the through hole 16, and the initial points 20 and final points 21 of all segments 19 lie along a circumference that is coaxial to the through hole 16 having greater diameter than the plate 2 and identifying a main plane, horizontal and parallel to the upper edge of the plate 2. The peripheral edge 17 develops all above the main plane.

As the accompanying figures show, the peripheral edge 17 is constituted by a continuous succession of stations 18, in such a way that the initial point 20 of a segment 19 comes to coincide with the final point 21 of the contiguous segment 19.

The better to delimit each station 18 and prevents the animals that use a station 18 from interfering with the animals that use the contiguous stations 18, the subdividing element 13 also comprises, in correspondence with each station 18, a first and second lateral bulkheads 23, 24 fastened superiorly to the lower surface 14 and extending towards the plate 2.

Each bulkhead 23, 24 develops in a plane passing through the initial point 20 (or with the final point) of the respective segment and through the axis of the through hole 16, coinciding with the central axis of symmetry in terms of the disposition of the stations 18.

In the case illustrated in the accompanying figures, the first bulkhead 23 of a station 18 constitutes also the second bulkhead 24 of the station 18 contiguous thereto, because of the uninterrupted succession of stations 18.

Advantageously, each bulkhead inferiorly has a seat 25 for the edge of the plate 2, the edge of the plate 2 being positioned in correspondence with the seat 25, not necessarily abutting.

Said seats 25 lie at a distance from the axis of the hole 16 that is smaller than the distance of the peripheral edge 17 from the axis of the hole 16, in such a way that a part of the subdividing element 13 projects radially relative to the underlying plate 2.

The subdividing element 13 also has, in correspondence with each station 18, a funnel-like profile 26.

Preferably, the feeding trough 1 further comprises means 27 for fastening the subdividing element 13 relative to the distributor 4.

If the connecting grid 6 is replaced by the subdividing element 13, the latter can be provided with latching teeth 11 similar to those described above with reference to the connecting grid 6.

If the grid 6 is present, the fastening means 27 are constituted, for instance, by two appendages 28 which, in use, are engaged to the conduit 5 for supplying the feed whereto the distributor 4 is fastened (Figure 8).

In the preferred embodiment the feeding trough 1 further comprises means 29 for adjusting the position of the subdividing element 13 along the axis of the body 8 of the distributor 4.

The adjusting means 29 comprise a cylindrical collar 30 integral with the subdividing element 13 and which internally defines the through hole 16.

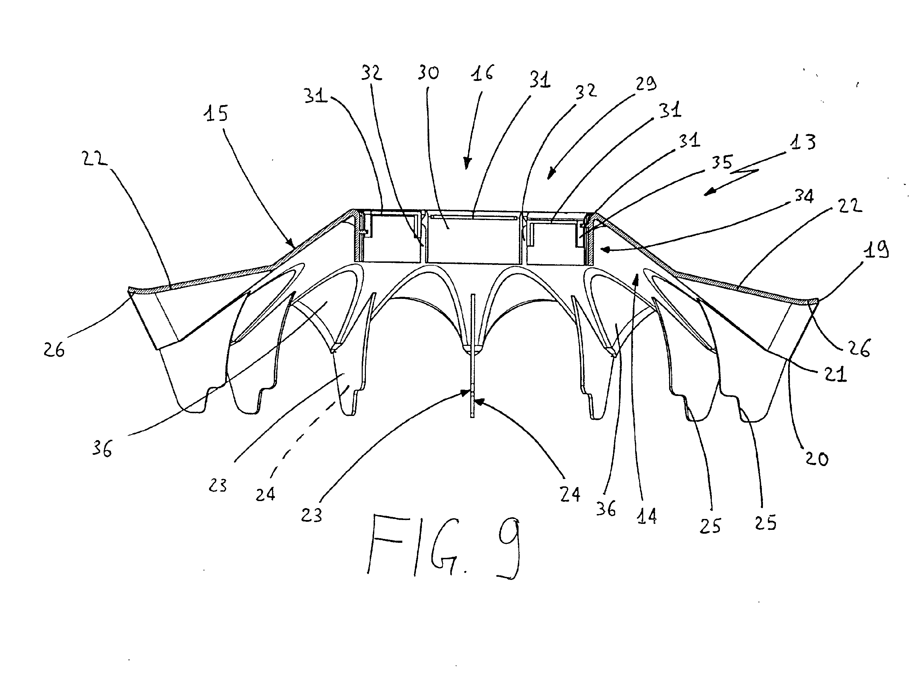

As shown in Figure 9, the collar 30 extends from the upper surface 15 towards the lower surface 14, and has on its inner surface 3 a plurality of first coupling shelves 31 (in this case, seven).

The first coupling shelves 31 develop each in a plane perpendicular to the axis of the collar 30 and each along a distinct arc of the collar 30 itself.

The first shelves 31 are thus positioned in such a way that a half-plane egressing the axis of the collar 30 never intersects more than a shelf.

Between each first shelf 31 and those closer thereto, the collar 30 also has a groove 32 parallel to its own axis which allows the collar 30 to be coupled to the spokes 9 of the connecting grid 6.

Each first shelf 31 is at a distance from the plate 2 of the feeding trough that is different from the others, whilst the distance between the planes of lay of the individual first shelves 31 can be more or less constant.

A plurality of second coupling shelves 33 is obtained externally to the distributor 4, on the body 8 thereof or on the grid 6, depending on the embodiments.

Said second shelves 33 reproduce the mutual disposition of the first shelves 31 (Figures 3, 4, 5 e 10).

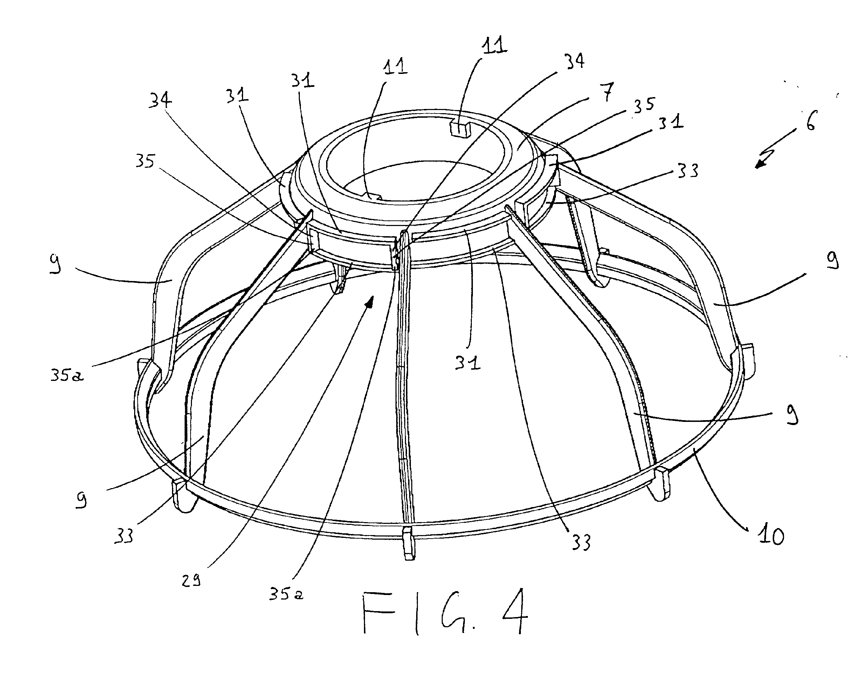

Figure 4 shows on the connecting grid 6 also the first shelves 31 of the subdividing element 13.

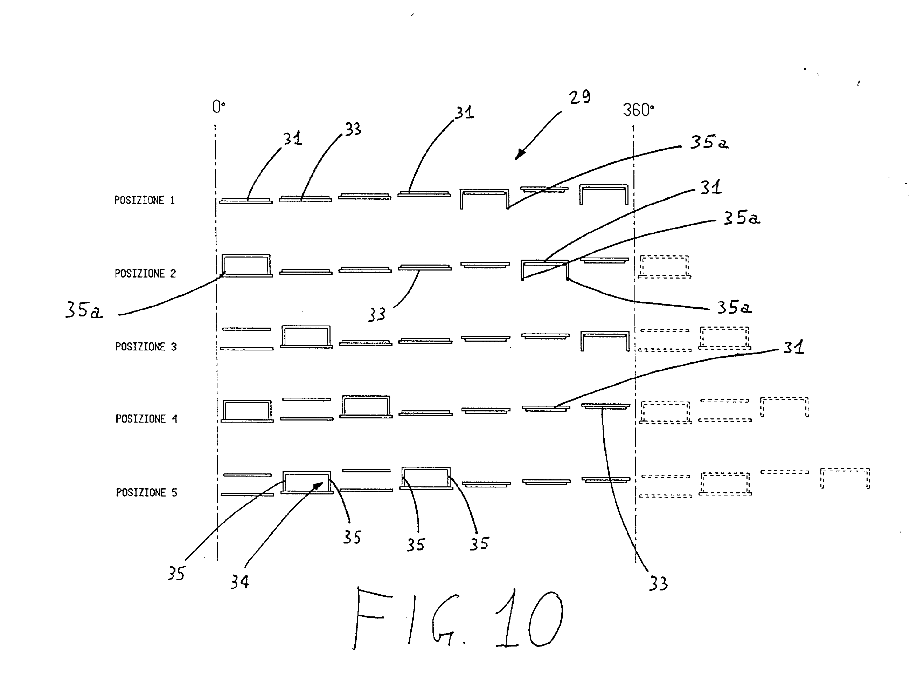

Figure 10 shows, developed in a plane, the distribution of the first and second shelves 33, with different possible couplings between them.

As Figure 10 shows, the second shelves 33 do not all have the same length, but those farthest away from the plate 2 have a smaller length.

In turn, two of the first shelves 31 farthest away from the plate 2 are provided, at their ends, with two spacers 34 each constituted by a rib 35 parallel to the axis of the collar 30, whose lower ends 35a define two additional planes of lay perpendicular to the axis of the collar 30 and distinct from the planes of lay of the first shelves 31.

The segment of the first shelves 31 between the two ribs 35 has a greater length than the shorter second shelves 33, so that the latter can be inserted therein without interfering with the ribs 35.

On the contrary, the segment of the first shelves 31 between the two ribs 35 has a shorter length than the longer second shelves 33, so that the latter cannot be inserted therein but are forced to interfere with the ribs 35.

Figure 10 schematically shows five different mutual disposition of the first and second shelves 33 that correspond to five different distances between the subdividing element 13 and the plate 2.

As is readily apparent from the above description, the feeding trough of the present invention, be it circular or shaped any other way, is always provided with a wall 36 having smooth, curved surface, which delimits at least partially each station 18, in such a way that each station 18 constitutes a guided inlet towards the feed contained in the plate 2. Moreover, said guided inlet allows a single animal at a time to access the feed.

In particular, the wall 36 delimits each station 18 superiorly and laterally, whilst inferiorly, each station 18 is delimited at least in part by the plate 2.

The feeding trough 1, in particular for aviculture, of the present invention in use works as a traditional feeding trough 1 in terms of discharging the feed into the plate 2 through the distributor 4.

The animals access the plate 2 through the stations 18 defined by the subdividing element 13 and delimited laterally by the lateral walls and inferiorly by the plate 2.

The profile of the vaults and of the lateral bulkheads confers a funnel-like shape to the stations 18 so that, if the feeding trough 1 is appropriately dimensioned, the animals can penetrate therein only with their head and part of the neck.

The amplitude of the passage for each station 18 is determined by adjusting the mutual disposition between the first and the second shelves 33.

The present invention achieves important advantages.

In the first place, the feeding trough of the present invention allows selectively to feed only the females simply by adjusting the amplitude of the access passage of each station.

At the same time, however, thanks to the smooth conformation without sharp corners and/or engagement elements of the subdividing element, it does not entail risks of injuries either to the males or to the females.

Additionally, the feeding trough of the present invention allows, thanks to its conformation that prevents the animals from excessively approaching the centre of the plate, the simultaneous exploitation of all stations by the animals.

This entails that, for the same dimensions of the plate, the feeding trough of the present invention allows simultaneously to feed a higher number of animals than traditional feeding troughs.

Obviously, a subdividing element obtained in similar fashion to the one described above (plurality of vault-shaped stations projecting relative to the edge of the element containing the feed), can also be coupled to channel feeding troughs (or having yet other shapes) and this solution must also be considered an integral part of the present invention.

It should also be noted that the present invention is relatively easy to realise and that the cost connected to embodying the invention is not very high.

The invention thus conceived can be subject to numerous modifications and variations, without thereby departing from the scope of the inventive concept that characterises it.

All components can be replaced by other technically equivalent elements and in practice all materials used, as well as the shapes and dimensions of the various components, can be any depending on requirements.

## Claims

1. Feeding trough, in particular for aviculture, provided with a plurality of feeding stations (18) through which the animals can access the feed present in a container (2), **characterised in that** each of said stations (18) is delimited at least partially by a wall (36), provided with a smooth, curve surface, and constitutes a guided inlet towards the feed, in such a way as to allow a single animal at a time to access the feed.

2. Feeding trough as claimed in claim 1 **characterised in that** said wall (36) delimits superiorly and laterally said station (18), the lower part thereof being delimited at least partially by said container (2).

3. Feeding trough as claimed in claim 1 or 2 **characterised in that** it comprises a lower plate (2) constituting said container and having an inner surface (3) defining the bottom of the plate for receiving the feed, and a subdividing element (13) having a lower surface (14) facing said plate (2), and an upper surface (15), said subdividing element (13) comprising a peripheral edge (17) having said plurality of stations (18) defined by segments (19) of the edge itself extending from an initial point (20) to a final point (21), in correspondence with each of said stations (18) said lower surface (14) being concave, and said stations (18) allowing, in use, an animal to access the plate (2).

4. Feeding trough as claimed in claim 3 **characterised in that** said plate has substantially circular shape, and **in that** it further comprises a distributor (4) of the feed operatively associated to said plate (2) above said inner surface (3), and able to be associated to a conduit (5) for transporting the feed, said subdividing element (13) having substantially discoidal shape, and being provided with a through hole (16) to allow the passage of the distributor (4) and the dispensing of the feed to the plate (2).

5. Feeding trough as claimed in claim 4 **characterised in that** at least said lower surface (14), in correspondence with each station (18), is vault-shaped (22), and it develops from said peripheral edge (17) towards the centre of said subdividing element (13), at least for part of the distance between the peripheral edge (17) itself and the through hole (16).

6. Feeding trough as claimed in claims 4 or 5 **characterised in that** each of said stations (18) has a symmetrical configuration relative to a plane that is perpendicular to the straight line joining the initial and final points, and equidistant from said initial and final points.

7. Feeding trough as claimed in claim 6 **characterised in that** said initial and final points of all said segments (19) lie in a same main horizontal plane, parallel to the upper edge of the plate (2), said stations (18) all developing from the same side of said main plane.

8. Feeding trough as claimed in any of the claims from 4 a 7 **characterised in that** said initial and final points of all the segments (19) lie along a circumference that is coaxial to said hole (16) and has greater diameter than said plate (2).

9. Feeding trough as claimed in any of the claims from 4 to 8 **characterised in that** said peripheral edge (17) is constituted by a continuous succession of stations (18), the initial point (20) of a segment (19) coinciding with the final point (21) of the contiguous segment (19).

10. Feeding trough as claimed in any of the claims from 3 a 8 **characterised in that** it further comprises, in correspondence with each station (18), a first and a second lateral bulkhead (24) superiorly fastened to said lower surface (14), to prevent the animals that use the contiguous stations (18) from interfering with the animals that use the contiguous stations (18), said first bulkhead (23) developing in a plane passing through said initial point (20) of the segment (19) delimiting the respective station (18) and perpendicular to the peripheral edge (17), and said second bulkhead (24) developing in a plane passing through said final point (21) of the segment (19) delimiting the respective station (18) and perpendicular to the peripheral edge (17).

11. Feeding trough as claimed in claim 9 **characterised in that** it further comprises, between each pair of contiguous stations (18), a lateral bulkhead fastened superiorly to said lower surface (14), to prevent the animals that use each station (18) from interfering with the animals that use the contiguous stations (18), said bulkhead developing in a plane passing through the point in common between the two stations (18) and perpendicular to the peripheral edge (17).

12. Feeding trough as claimed in claim 10 or 11 **characterised in that** each of said bulkheads has a seat (25) for the edge of the plate (2), said edge of the plate (2) being positioned in correspondence with said seat (25).

13. Feeding trough as claimed in claim 12 **characterised in that** said seats lie at a distance from the centre of the plate (2) that is smaller than the distance of the peripheral edge (17) from the centre of the plate (2).

14. Feeding trough as claimed in any of the previous claims **characterised in that** it has a cylindrical symmetry.

15. Feeding trough as claimed in any of the previous claims **characterised in that** it comprises at least ten stations (18).

16. Feeding trough as claimed in any of the previous claims **characterised in that** it comprises fourteen stations (18).

17. Feeding trough as claimed in any of the previous claims **characterised in that** it further comprises means (27) for fastening the subdividing element (13) relative to the distributor (4).

18. Feeding trough as claimed in any of the claims from 3 a 17 **characterised in that** it further comprises means (29) for adjusting the position of said subdividing element (13) relative to the plate (2).

19. Feeding trough as claimed in claims 18 and 4 **characterised in that** said adjusting means (29) comprise a cylindrical collar (30) integral with said subdividing element (13) and defining said through hole (16), a plurality of first coupling shelves (31) internally to said collar (30) and developing each along a distinct arc of said collar (30), each shelf extending in a plane that is perpendicular to the axis of the collar (30) and distinct from those wherein the other shelves lie, and a plurality of second coupling shelves (33) externally integral with said distributor (4) and developing each along a distinct arc of said distributor (4), each second shelf (33) extending in a plane that is perpendicular to the axis of the distributor (4) and distinct from those in which the other second shelves (33) lie, the mutual distance between the planes of lay of said first shelves (31) being the same as the mutual distance between the planes of lay of said second shelves (33).

20. Feeding trough as claimed in claim 19 **characterised in that** said planes of lay of said first shelves (31) are mutually equidistant, and **in that** said planes of lay of said second shelves (33) are mutually equidistant.

21. Feeding trough as claimed in claim 19 or 20 **characterised in that** at least one of said first shelves (31) is provided with a spacer (34) for selectively distancing said first shelf (31) from some of said second shelves (33) obtained on the distributor (4).

22. Element (13) for subdividing the feeding stations (18) in feeding troughs (1) in particular for aviculture, of the type comprising a lower plate (2), said subdividing element (13) having a lower surface (14) that can face said plate (2), and an upper surface (15), **characterised in that** it comprises a peripheral edge (17) having a plurality of stations (18) defined by segments (19) of the edge itself and extending from an initial point (20) to a final point (21), in correspondence with said stations (18), said lower surface (14) being concave, and said stations (18) allowing, in use, an animal to access the plate (2) of the feeding trough (1) and reach the feed.

23. Subdividing element as claimed in claim 22 **characterised in that** said plate has substantially circular shape and said subdividing element (13) has substantially discoidal and is provided with a through hole (16) to allow the passage of a distributor (4) of the feeding trough (1) for dispensing the feed to the plate (2).

24. Subdividing element as claimed in claim 23 **characterised in that** at least said lower surface (14), in correspondence with each station (18), is vault shaped (22), and develops from said peripheral edge (17) towards the centre of said subdividing element (13), at least for part of the distance between the peripheral edge (17) and the through hole (16).

25. Subdividing element as claimed in claim 23 or 24 **characterised in that** each of said stations (18) has a symmetrical configuration relative to a plane that is perpendicular to the straight line joining the initial and final points, and equidistant from said initial and final points.

26. Subdividing element as claimed in claim 25 **characterised in that** said initial and final points of all said segments (19) lie in a same main plane that in use can be positioned horizontal and parallel to the upper edge of the plate (2), said stations (18) all developing from the same side of said main plane.

27. Subdividing element as claimed in any of the claims from 23 to 26 **characterised in that** said initial and final points of all segments (19) lie along a circumference that is coaxial to the hole.

28. Subdividing element as claimed in any of the claims from 23 to 27 **characterised in that** said peripheral edge (17) is constituted by a continuous succession of stations (18), the initial point (20) of a segment (19) coinciding with the final point (21) of the contiguous segment (19).

29. Subdividing element as claimed in any of the claims from 22 to 27 **characterised in that** it further comprises, in correspondence with each station (18), a first and a second lateral bulkheads (24) superiorly fastened to said lower surface (14), to prevent the animals that use said station (18) from interfering with the animals that use the contiguous stations (18), said first bulkhead (23) developing in a plane passing through said initial point (20) of the segment (19) delimiting the respective station (18) and perpendicular to the peripheral edge (17), and said second bulkhead (24) developing in a plane passing through said final point (21) of the segment (19) delimiting the respective station (18) and perpendicular to the peripheral edge (17).

30. Subdividing element as claimed in claim 28 **characterised in that** it further comprises, between each pair of contiguous stations (18), a lateral wall superiorly fastened to said lower surface (14), to prevent the animals that use each station (18) from interfering with the animals that use the contiguous stations (18), said bulkhead developing in a plane passing through the point in common between the two stations (18) and perpendicular to the peripheral edge (17).

31. Subdividing element as claimed in claim 29 or 30 **characterised in that** each of said bulkheads has a seat (25) for the edge of the plate (2), said edge of the plate (2) being located in correspondence with said seat (25).

32. Subdividing element as claimed in claim 31 **characterised in that** said seats lie at a distance from the axis of the hole (16) that is smaller than the distance of the peripheral edge (17) from the axis of the hole (16).

33. Subdividing element as claimed in any of the claims from 22 to 32 **characterised in that** it has a cylindrical symmetry.

34. Subdividing element as claimed in any of the claims from 22 to 33 **characterised in that** it comprises at least ten stations (18).

35. Subdividing element as claimed in any of the claims from 22 to 34 **characterised in that** it comprises fourteen stations (18).

36. Subdividing element as claimed in any of the claims from 22 to 35 **characterised in that** it further comprises means (27) for fastening the feeding trough (1) relative to the plate (2).

37. Subdividing element as claimed in any of the claims from 22 to 36 **characterised in that** it further comprises means (29) for adjusting the position of said subdividing element (13) relative to said plate (2).

38. Subdividing element as claimed in claims 22 and 37 **characterised in that** said adjusting means (29) comprise a cylindrical collar (30) defining said through hole (16), and a plurality of first coupling shelves (31) internally integral with said collar (30) and developing each along a distinct arc of said collar (30), each first shelf (31) extending in a plane that is perpendicular to the axis of the collar (30) and distinct from the ones in which the other first shelves (31) lie, said first shelves (31) being able to be associated to counter-shaped second shelves (33) provided on the distributor (4).

39. Subdividing element as claimed in claim 38 **characterised in that** said planes of lay of said first shelves (31) are mutually equidistant.

40. Subdividing element as claimed in claim 38 or 39 **characterised in that** at least one of said first shelves (31) is provided with a spacer (34) for selectively distancing said first shelf (31) from some of the second shelves (33) obtained on the distributor (4).
